# EUROPEAN PATENT APPLICATION

(11) **EP 3 987 938 A1**
(43) Date of publication of application: **27.04.2022**
(21) Application number: 20382911.4
(22) Date of filing: 20.10.2020
(51) Int. Cl.: A23B 4/16, A23L 3/3418, B65D 88/16, A23L 3/3409

(54) **PACKAGING OF PROTEIN MEAL OR HYDROLYSATES WITH LOW LEVELS OF ANTIOXIDANTS**

(71) Applicant: Saria International GmbH, 59379 Selm (DE)
(72) Inventor: PUIG FERRER, Marta, 08403 Granollers (ES); DURÁN NAVARRETE, Iria, 36200 VIGO (ES); MAHO, Yann, 44520 ISSE (FR)
(74) Representative: EP&C

(57) **Abstract**

The present invention discloses a method for protective atmosphere packaging of protein meal or hydrolysate, the method comprising filling a container with a storage capacity of at least 20 kg, such as an FIBC, with at least 20 kg of protein meal or hydrolysate without significant head space, wherein the protein meal or hydrolysate comprises less than 120 ppm of synthetic antioxidants and less than 420 ppm of added natural antioxidants, depleting the amount of oxygen in the container to a value below an amount which is equivalent to the amount of oxygen present at a level of 15% oxygen at atmospheric pressure, and sealing the container.

## Description

The present invention relates to a method for protective atmosphere packaging of protein meal or hydrolysate, a container with a storage capacity of at least 20 kg comprising protein meal or hydrolysate with less than 120 ppm of synthetic antioxidants and less than 420 ppm of natural antioxidants, and to the use of a container with a storage capacity of at least 20 kg for storing and/or shipping such protein meal or hydrolysate.

### Background art

Animal diets require a balanced source of protein and fatty acids. In pet food or feeds, this source is provided by protein meal, such as fish meal, poultry meal, pork meal, non-species-specific protein meals, blood meal, feather meal, feather hydrolysates and/or other protein hydrolysates. Animal based protein meal may be produced by cooking, pressing, drying, and grinding of an animal-based protein source. The process of converting otherwise discarded animal tissue into useable protein sources is broadly referred to as wet or dry rendering or variances thereof. For example, in the case of fish meal, the cooking stage may comprise moving fish through a commercial cooker (a long steam-jacketed cylinder) by a screw conveyor. The cooked fish is then pressed, expelling some of its liquids (fat and water with dissolved matter), leaving a so called "press cake". The water content is reduced from about 70% to about 50% and the amount of oil may be reduced down to about 4%. The press cake is then dried, e.g. by tumbling inside a disk dryer or by hot air or any other drying method. The dried meal is subsequently ground to reduce any lumps or bone particles, thereby producing the fish meal. Production of land-based animal meals is similar and can be further referred to in e.g. Animal By-Product Processing and Utilization by H.W. Ockermann & C.L. Hansen (CRC Press, 2000) and other handbooks. Similarly animal-based production of protein hydrolysates is publicly well known as well.

Production of fish meal, as well as of other animal-based protein meals and hydrolysates, is often performed in large batches, which need to be stored and shipped prior to use in pet food or feed. Storage and shipping are usually performed in flexible intermediate bulk containers (FIBC), in other words big bags, which are designed to store quantities larger than 20 kg, usually in the order of 1000 - 1500 kg or even bigger (>1500kg) using so called "flexitanks".

Protein meal and hydrolysates however, when packed in such large quantities, can spontaneously combust from heat generated by oxidation of the polyunsaturated fatty acids in the product. In the past, factory ships have even sunk because of such fires. Moreover, oxidation of protein reduces the nutritional quality and taste of the product. Fat oxidative processes lead to rancidity. Rancid fat is offensive in odour and flavour and includes compounds that are toxic when consumed. Up to now, the oxidation problem in bulk amounts of protein meal or hydrolysates (i.e. amounts > 20 kg) has been tackled by addition of synthetic or natural antioxidants to the protein meal or hydrolysate.

Synthetic antioxidants are antioxidants that cannot be obtained from natural sources, and include BHA (E-320), BHT (E-321), TBHQ (E-319), propyl galate (E-310), and ethoxyquin (E-324), among others. Although these substances have up until now been judged to be safe in the low amounts needed for preventing oxidation in pet food or feed, they may be toxic if ingested in larger amounts. Even low amount exposure is suspected as carcinogenic today. Public concerns about the safety of these antioxidants therefore have driven the need for alternative packing and shipping solutions of large quantities (> 20 kg) of protein meal.

Natural antioxidants are less toxic and therefore safer, but have their own disadvantages: they are more expensive and less effective than synthetic antioxidants, difficult to apply due to their viscosity, and they can cause unwanted flavour profile changes, to name a few.

### Description of invention

It is an objective of the present invention to provide a packing and storage solution for large quantities (> 20 kg) of protein meal or hydrolysate, in which significantly less (synthetic and/or natural) antioxidants are used than in prior art solutions, while offering at least a comparable, and preferably a longer shelf life. Thereto, the present invention provides a method for protective atmosphere packaging of protein meal or hydrolysate, the method comprising:
- filling a flexible container with a storage capacity of at least 20 kg, such as an FIBC, with at least 20 kg of protein meal or hydrolysate without significant head space,
   wherein the protein meal or hydrolysate comprises less than 120 ppm of synthetic antioxidants and less than 420 ppm of natural antioxidants,
- depleting the amount of oxygen in the container to a value below an amount which is equivalent to the amount of oxygen present at a level of 15% oxygen at atmospheric pressure,
- sealing the container.

### Container

The container with a storage capacity of at least 20 kg of the present invention is preferably a flexible container. The storage capacity of the container is expressed in relation to the protein meal or hydrolysate with which the container is filled. For example, at a density of 600 kg m⁻³, the volume of the container should be at least 33 L. Preferably, the container has a storage capacity of at least 40 kg, more preferably at least 100 kg, and is correspondingly filled with preferably at least 40 kg, more preferably at least 100 kg of protein meal or hydrolysate. Preferably, the container is a flexible intermediate bulk container (FIBC). An FIBC, jumbo bag, bulk bag, super sack, big bag, or flexitank, is an industrial container made of flexible fabric that is designed for storing and transporting dry, flowable products, such as sand, fertilizer, and granules of plastic. FIBCs are most often made of thick woven polyethylene or polypropylene, and normally measure about 80 - 150 cm in diameter and vary in height from 100 to 200 cm. Their capacity is normally around 1000 litres, but the larger units can store even more, whereas also smaller "big bags" exist. Preferably the FIBC used in the present invention has a capacity of at least 20 litres, such as at least 40 litres, preferably at least 100 litres, more preferably at least 500 litres, most preferably at least 1000 litres.

Transporting and loading is done on either pallets or by lifting it from the loops. FIBCs are made with either one, two or four lifting loops. The single loop bag is suitable for one-man operation as there is no need for a second man to put the loops on the loader hook. Emptying is made easy by a special opening in the bottom such as a discharge spout, of which there are several options, or by simply cutting it open.

The fabric of FIBCs may be uncoated, or it may be coated to decrease permeability. FIBCs may comprise an inner bag, also called a liner. Such a liner may comprise plastic and/or aluminium. The liner first of all prevents the contents of the FIBC from leaking out, and may also serve to provide a layer with a decreased oxygen and/or water permeability for increasing the shelf life of e.g. food products that are stored and/or transported in the FIBC.

The liner may be equipped with a valve that allows connection with a vacuum pump and/or gas injection apparatus. Preferably the valve is a two-way valve, such that both extraction and injection of gas can be executed. If only extraction of gas is required, the valve may be a one-way valve. The valve may have a lid to avoid damage or can be sealed with a sticker or other methods.

The FIBC preferably comprises an interior liner. Such a liner may for example be a plastic film, comprising one or multiple layers of plastic or the interior liner may comprise another barrier material such as aluminium. The liner, and therefore the FIBC, preferably comprises a film with an oxygen permeability according to ASTM D3985 of less than 5 cm³ m⁻² day⁻¹, more preferably less than 3 cm³ m⁻² day⁻¹, even more preferably less than 1 cm³ m⁻² day⁻¹, yet more preferably less than 0.2 cm³ m⁻² day⁻¹, most preferably less than 0.02 cm³ m⁻² day-¹. The lower the oxygen permeability, the longer the shelf life of the product.

Preferably, the FIBC comprises a film with a water permeability according to ASTM F1249 of less than 1 g m⁻² day⁻¹, more preferably less than 0.7 g m⁻² day⁻¹, even more preferably less than 0.4 g m⁻² day⁻¹, yet more preferably less than 0.1 g m⁻² day⁻¹, most preferably less than 0.05 g m⁻² day⁻¹. The lower the water permeability, the longer the shelf life of the product.

The container is filled without significant headspace, meaning that the empty/gas filled space in the container above the protein meal or hydrolysate is less than 5%, preferably less than 1% of the total volume of the container.

Suitable interior liners are layered materials, i.e. laminate films. Preferably, the interior liner comprises a layer of aluminum because of its superior barrier properties. Particularly preferred is a laminate film of PET/adhesive/aluminum/adhesive/PE (from outside to inside of the bag). Such a laminate film combines supreme gas barrier properties, protection from UV/light and minimum moisture permeability with flexibility and high puncture resistance. Moreover, such a film can be sealed easily in a vacuum-proof manner due to the PE layer inside. Alternatively, preferred is an all plastic laminate film which comprises at least one layer of ethylene vinyl alcohol (EVOH). Such a laminate film may have excellent barrier properties combined with a superior strength and relatively easy recyclability as compared to aluminum comprising films. Particularly preferred is a laminate film which comprises at least one sequence of layers being PA/EVOH/PA, wherein PA is a polyamide.

### Protein meal or hydrolysate

Protein meals or hydrolysates in their broadest sense typically are powdered substances comprising a dried and subsequently grounded source of protein. Preferably the protein source can also be cooked and/or pressed in order to reduce the meal's fat content as much as possible. Protein meal may for example be produced from high protein vegetable sources such as beans. Animal based protein meal may be based on insects, fish, other aquatic animals, land animals (including among others ruminants, pigs, and other terrestrial species), and avian animals (such as poultry).

Protein meal or hydrolysates from animal sources, including fish, are often produced from left-over materials from other processes. Fish meal for example may be produced from targeted fishmeal fisheries, but is often produced from by-catch, i.e. fish or other marine species that are caught unintentionally while catching certain target species and target sizes of fish, crabs, etc. Another source are trimmings. This is comparable for land animal proteins. For example, offal and animal blood from the meat industry are well-known sources for e.g. pork meal, poultry meal, non-species defined meals, blood meal, and the respective hydrolysates. Further by-products from the poultry industry are feathers, which may be processed into feather meals or hydrolysates. The aforementioned protein meal or hydrolysates are an environmentally friendly and waste avoiding solution for producing animal food and feed. They therefore greatly support the idea of the circular bio-economy. Insects can easily be bred without resulting in significant waste and emission of greenhouse gases. Protein meals or hydrolysates from insects therefore also serve as an environmentally friendly ingredient for producing pet food and feed.

Preferably, the protein meal or hydrolysate is based on fish, land animals, avian animals and/or insects, more preferably the protein meal or hydrolysate is a fish, land animal and/or avian animal protein meal or hydrolysate, even more preferably the protein meal or hydrolysate is chosen from the group consisting of fish meal, poultry meal, pork meal, non-species specific protein meal, any other species defined land animal meal, blood meal, poultry meal, feather meal and the respective hydrolysates.

Fish meal is particularly preferred because it delivers high-quality amino acids in the protein matrix, has nutritionally available minerals, and the residual fat carries a meaningful load of omega-3 fatty acids. The flavour is well accepted by dogs and cats. Fishmeal is of course as well a highly interesting protein source for fish itself due to the similarity of the protein composition. Moreover, it has surprisingly been found that the method of the present invention is applicable to fish meal most advantageously. Without any added antioxidant, fish meal that was packaged according to the method according to the invention was stable for at least a year without addition of antioxidants, neither synthetic nor natural.

Poultry meal and pork meal each individually are particularly preferred because they are a natural source of protein and minerals, including calcium and phosphorous, which may be used as ingredient in animal feed for pet food, swine, birds, fish and other non-ruminant species. Poultry meal is especially preferred in premium pet food applications.

Blood meal is particularly preferred because besides being a source of protein and minerals, it is also very nitrogen rich. Therefore, blood meals are an interesting ingredient for aquaculture diets and fur animals. However, this makes it not only suitable as animal feed ingredient, but also as soil fertilizer.

Feather meal is particularly preferred because it is a high-protein feed that can be widely used as an additive for making livestock, poultry and aquatic feed. The protein content of feather meal can be as high as 80% or higher. The amino acid composition is relatively complete, except for the lysine and methionine content, which are e.g. lower than in fish meal. The other trace elements are present in relatively high amounts as compared to other protein meals. Its content of cysteine is very high. Feather hydrolysates are a preferred species of feather meal, as feather hydrolysates are often more digestible due to their lower average molecular weight than normal non-hydrolysed feather meals. Therefore, feather meal and hydrolysates are very interesting for aquaculture and pet food applications.

Protein hydrolysates are used in all animal diets across species due to their high digestibility, most often high protein content and other functionalities based either on their molecular structure or amino acid sequences inside the respective polypeptides.

Other protein meal or hydrolysates, e.g. from more exotic species origin are especially used in claim pet food applications, such as wild boar, kangaroo, tuna, pigeon, duck and others.

### Antioxidant

Antioxidants are food additives capable of delaying or preventing the rancidity of food due to oxidation, and therefore of lengthening the shelf-life of the products. On the one hand there are the natural antioxidants, which may be obtained entirely from natural sources, and on the other the synthetic antioxidants, which are created from chemical processes and cannot be obtained from natural sources. However, natural molecular component might be included in those. Preferably, the natural antioxidants of the present invention are obtained entirely from natural sources.

Commercially, antioxidants are oftentimes sold as a blend of the active ingredient (the antioxidant(s)) with other excipients. Concentrations of antioxidants (in ppm) mentioned in the present document relate to the concentration of the active ingredient. Natural antioxidants include (with European additive and/or feed additive identification number between brackets) ascorbic acid (3a300, E300), tocopherols (E 306, 308, 309), tocopherol extracts from vegetable oils (1b306(i)), tocopherol-rich extracts from vegetable oils (delta rich), alpha-tocopherol (1b307), tocotrienol, rosemary extract (E 392), gallic acid, carnosic acid, garlic extract, olive extract rich in phenolic compounds, and catechins-rich tea extract.

Synthetic antioxidants include (with European feed additive identification number between brackets) sodium ascorbate (1b301), ascorbyl palmitate (1b304), propyl gallate (E 310), BHA (E 320), BHT (E 321), TBHQ (E 319), and ethoxyquin (E 324).

Preferably, the protein meal or hydrolysate comprises less than 100 ppm of synthetic antioxidants, more preferably less than 80 ppm, even more preferably less than 60 ppm, yet more preferably less than 40 ppm, yet more preferably less than 20 ppm. This concentration as above mentioned always refers to the level of active ingredient inside the product before filling the container.

Most preferably, the protein meal or hydrolysates comprise no detectable synthetic antioxidants.

Even though synthetic antioxidants are often very effective in preventing oxidation of the products that they are added to, they may be toxic if ingested in larger amounts. Even low amount exposure is suspected as cancerous. Therefore, a low (lower than 100, 80, 60, 40, or 20 ppm) or even no detectable amount of synthetic antioxidant is preferred. Several synthetic antioxidants are specifically undesirable.

BHT (butylhydroxytoluene) for example may cause liver damage or even liver cancer, and may cause (pseudo)-allergic reactions. BHA (butylhydroxyanisol) may also cause (pseudo)-allergic reactions, and much evidence exists that the compound is carcinogenic for animals. Nowadays it is in EU even forbidden to be used in feline pet food. The health effects on animals and humans exposed to varying levels of ethoxyquin observed in scientific studies are diverse, and include: loss of weight, changes in liver, kidney, alimentary duct, urinary bladder and mitochondria, anemia, lethargy, discolored urine, skin, or fur, increase in mortality, detrimental effect on immunity, condition factor of final body weight in relation to body length of fish and inducement of allergies. A 2015 review by the European Food Safety Authority indicated that data to assess the safety of ethoxyquin as a feed additive for target animals, or its safety for consumers and the environment are lacking. The agency found one of its metabolites, ethoxyquin quinone imine, to be possibly genotoxic, and p-phenetidine, an impurity that could be present from the manufacturing process, to be possibly mutagenic. Therefore, the protein meal or hydrolysate of the present invention preferably comprises less than 100 ppm, more preferably less than 80 ppm, even more preferably less than 60 ppm, yet more preferably less than 40 ppm, most preferably less than 20 ppm of each of BHT, BHA, and ethoxyquin individually or as sum of these. Although ethoxyquin is a very effective antioxidant, being up to eight times as effective as other synthetic antioxidants, it is also the most toxic antioxidant. Therefore, particularly preferably, the protein meal or hydrolysate of the present invention comprises less than 20 ppm of ethoxyquin, even more preferably the protein meal or hydrolysate comprises no detectable ethoxyquin.

The protein meal or hydrolysate of the present invention may comprise added natural antioxidants. Natural antioxidants are generally considered safe for animal (and human) consumption and are not regulated. This means that they may be added to a protein meal or hydrolysate in relatively large amounts.

Natural or plant-based antioxidants however do have a number of disadvantages. They generally cost more than synthetic antioxidants and additionally should be added to pet food or feed in larger amounts than synthetic antioxidants, as they are commonly less active. The actual activity depends very much on particular conditions and pet food and feed composition. Furthermore, the availability of natural antioxidants depends on the season. Moreover, the antioxidant activity of plant-based antioxidants may depend on the fruiting stage, nature of the extracts, mode of extraction, presence of an inhibitor, presence of a synergistic effect with other components, and the concentration of active extract components. This makes the effect of natural antioxidants unpredictable. Furthermore, natural antioxidants also tend to be more viscous and less effective, which hinders their application. Possibly the biggest drawback of natural antioxidants may be the flavour profile changes that they may cause. Natural antioxidants are very likely to affect the sensory property of foods.

Therefore, preferably, the protein meal or hydrolysate comprises less than 400 ppm of added natural antioxidants, more preferably less than 320 ppm of added natural antioxidants, even more preferably less than 240 ppm of added natural-antioxidants, yet more preferably less than 160 ppm of added natural antioxidants, most preferably less than 80 ppm of added natural antioxidants.

Most preferably, the protein meal or hydrolysate comprises no detectable natural antioxidants.

For some protein meals or hydrolysates, due to their composition, addition of a small amount (i.e. less than 400 ppm, 320 ppm, 240 ppm, 160 ppm or 80 ppm) of natural antioxidant may have advantages. For example, the shelf life of the product when produced by the method according to the invention may be significantly increased. Particularly preferred natural antioxidants are natural antioxidants chosen from the group of tocopherols, rosemary extracts, and carnosic acid. The before mentioned antioxidants are deemed to be the most effective natural antioxidants. Moreover, tocopherols, besides serving as an antioxidant also serve as a vitamin (vitamin E). The vitamin activity increases from delta- to alpha-tocopherol, whereas the antioxidant activity increases from alpha- to delta-tocopherol. Rosemary extracts contain among others carnosic acids as active antioxidant. Depending on the manufacturing process rosemary extracts contain odour sensitive compounds for cats / dogs and therefore are not well accepted by some pet food customers. Pure carnosic acids are free of odours and are therefore preferred. It has been found that the effect of the preferred amounts (i.e. less than 400 ppm, 320 ppm, 240 ppm, 160 ppm or 80 ppm) of the latter mentioned antioxidants on the flavour of the protein meal or hydrolysate is not disadvantageous. No negative effect on feed intake by test animals was observed.

Preferably, the protein meal or hydrolysate comprises either only added natural antioxidants, or only synthetic antioxidants. A combination of synthetic and natural antioxidant can however also be used. When the protein meal or hydrolysate comprises both types of antioxidants, preferably the amount of synthetic antioxidants is below 100 ppm and the amount of natural antioxidants is below 80 ppm, alternatively preferably the amount of synthetic antioxidants is below 80 ppm and the amount of natural antioxidants is below 160 ppm, alternatively preferably the amount of synthetic antioxidants is below 60 ppm and the amount of natural antioxidants is below 240 ppm, alternatively preferably the amount of synthetic antioxidants is below 40 ppm and the amount of natural antioxidants is below 320 ppm, or alternatively preferably the amount of synthetic antioxidants is below 20 ppm and the amount of natural antioxidants is below 400 ppm. A combination of antioxidants allows for a low synthetic product with a more stable shelf life at a reduced cost compared to using only natural.

Additives other than antioxidants may be added to the protein meal or hydrolysate as well. Examples of such additives are preservatives, emulsifiers, stabilizers, thickeners, gelling agents, binders, substances for control of radionuclide contamination, anticaking agents, acidity regulators, silage additives, denaturants, substances for reduction of the contamination of feed by mycotoxins, hygiene condition enhancers, colourants, flavouring compounds, vitamins, compounds of trace elements, amino acids (and their salts and analogues), urea (and its derivatives), digestibility enhancers, gut flora stabilisers, substances which favourably affect the environment, and physiological condition stabilizers. These additives have been categorized in EC regulation No. 1831/2003.

Examples of preservatives are anti-salmonella and anti-mold products such as propionic acid (E280). Specific preservatives are e.g. citric acid (E330), formic acid (E236), sodium formate (E237), and acetic acid (E260). An anticaking agent is sepiolite (E562).

More preferably, the protein meal or hydrolysate is free from any additives other than antioxidants.

### Reduction of oxygen level

The reduction of oxygen levels is important to the present process. Since a variety of different materials with different properties (content of hard structures (bones) or soft parts (protein aggregates)) can be processed by the invention, a simple operational parameter is selected. Percentage of available oxygen inside the FIBC is a suitable parameter. Oxygen level in % can be measured under different pressures (underpressure, normal pressure and overpressurized conditions). The values for % of oxygen used in the present application refer to an oxygen level in % under normalized (i.e. atmospheric) pressure conditions if not indicated differently. Depleting the level of oxygen below 15% provides acceptable results. During oxygen depletion lower levels may typically be reached. However, there may be a recovery of oxygen levels during sealing of the container by diffusion and other mechanisms. Preferably, the level of oxygen after sealing is below 10%, more preferably below 6%, more preferably below 5%, more preferably below 4%, even more preferably below 3%, yet more preferably below 2%, most preferably below 1%. The lower the level of oxygen, the longer the shelf life of the protein meal or hydrolysate. Therefore, each percent decrease in oxygen level is highly advantageous. However, the procedure to reach lower levels of oxygen in the containers also takes longer, and is therefore costlier. It depends on the desired shelf-life which level of oxygen is preferred.

The level of oxygen is preferably depleted by evacuating the container and/or purging (i.e. injecting) with an inert gas. The inert gas may for example be nitrogen, carbon dioxide, or a mixture of these. Nitrogen is preferred. Multiple rounds of evacuating and purging may be used to reach the desired level of oxygen. Different starting and finishing conditions are possible. Specifically, two different starting conditions, which are i) ambient atmosphere and ii) inert gas atmosphere, and two different finishing conditions, which are a) reduced pressure and b) ambient pressure inert gas atmosphere are possible. For the sake of clarity, an inert gas atmosphere is defined as an atmosphere which has at least 5% increased levels of the inert gas as compared to ambient atmosphere. The different starting and finishing conditions may be achieved in a number of ways, for which the below descriptions are exemplary but not limiting.

The simplest method of the invention is reducing the oxygen by vacuum only. Here the surrounding fabric of the container compresses around the protein meal or hydrolysate by means of the increasing vacuum. This occurs until inside the container after evacuation the air pressure is at most 800 mbar, such as at most 700 mbar, 600 mbar, 500 mbar, 400 mbar, 300 mbar, 200 mbar or even as low as 100 mbar. This relates to 17%, 15%, 13%, 10%, 8%, 6%, 4% down to 2% of available oxygen at reduced pressure. Since the protein meal or hydrolysate differs in its structure, the moment the desired vacuum is reached is determined by its resistance to compress further against the provided strength of the vacuum pump. The lower the pressure, the lower the absolute amount of oxygen.

Using an alternative procedure, the container (under ambient atmosphere) may be filled with the protein meal or hydrolysate, after which the filling opening of the container is sealed. The starting condition is then ambient atmosphere. An opening or valve for connecting the container with a source of inert gas and/or a vacuum pump in an airtight manner may then be used in evacuating the container to a desired vacuum level. Preferably the pressure inside the container after evacuation is at most 800 mbar, such as at most 700 mbar, 600 mbar, 500 mbar, 400 mbar, 300 mbar, 200 mbar, or even as low as 100 mbar, which can be expressed analogous to the first method as % oxygen. The lower the pressure, the lower the absolute amount of oxygen. After evacuation, the container may either be finally sealed (i.e. closed airtight) by closing the valve with a seal or by its design, or it may be purged (injected) with inert gas again. Thus, when the container is not sealed immediately after evacuating, gas atmosphere may be reintroduced by further inert gas in one or multiple cycles before sealing all and any remaining openings of the container. Preferably, the level of oxygen in the container is depleted by subsequently evacuating the container to a pressure below 800 mbar, more preferably of at most 700 mbar, 600 mbar, 500 mbar, 400 mbar or 300 mbar, and purging with an inert gas to atmospheric pressure at least once. The second procedure of the invention is therefore an advanced version of the first method, diluting the remaining oxygen with the additional inert gas and evacuating therefore easier and more efficiently towards lower levels of residual oxygen. Such final oxygen levels may therefore even be below those of the first procedure, even reaching values lower than 1% oxygen. One could speak here about a repeating vacuum procedure. Preferably, the procedure is repeated at least 2 times, such as at least 3 times, more preferably at least 4 times.

### Peroxide value

Detection of peroxide gives the initial evidence of rancidity in unsaturated fats and oils. It gives a measure of the extent to which an oil sample has undergone primary oxidation. Peroxide value, thus the concentration of peroxide in an oil or fat, is useful for assessing the extent to which spoilage has advanced. The peroxide value is defined as the amount of peroxide oxygen per 1 kilogram of protein meal or hydrolysate, in milli-equivalents per kilogram (meqO₂/kg) or millimoles per kilogram (mmol/kg), wherein 1 meqO₂ = 0.5 mmolO₂. The peroxide value may be determined by methods well known to the skilled person. Peroxide values for the protein meal or hydrolysate packaged according to the method of the present invention are preferably below 20 meqO₂/Kg, more preferably below 15 meqO₂/Kg, even more preferably below 10 meqO₂/Kg, most preferably below 8 meq/O₂/Kg.

The peroxide value depends on the fatty acid composition, and its value therefore may vary between different kinds of protein meal or hydrolysates. The peroxide values for protein meal packaged according to the method of the invention are however relatively stable during the storage time. This means that during the storage time, the measured peroxide value for protein meal or hydrolysate in a sealed container is never more than twice as high as a value measured at an earlier date for the same container, preferably never more than 1.5 times as high. It is assumed that between measurements, the container is properly sealed and the packing atmosphere does not change significantly. The storage time, i.e. the time during which the container remains sealed after packaging, is preferably at least 1 month, more preferably at least 2 months, even more preferably at least 3 months, yet more preferably at least 6 months, most preferably at least 12 months. To alternatively define term relatively stable for the peroxide value, a relative peroxide value PVᵣₑₗ is defined, wherein PVᵣₑₗ = PVₛₜₐᵣₜ / PVₜ, wherein PVₛₜₐᵣₜ is the peroxide value at packing, and PVₜ is the peroxide value at time t. Preferably, the relative peroxide value within the first month (t = 1 month and smaller), more preferably within the first 2 months, even more preferably within the 3 months, yet more preferably within the first 6 months, most preferably within the first 12 months after the packing date has a value < 6, preferably < 4, more preferably < 2, even more preferably < 1.5, most preferably < 1.

### Hexanal value

Hexanal is a secondary product of lipid oxidation. Its concentration is measured in mg/kg (ppm). The hexanal concentration in a sample (hexanal value) may be determined by methods well known to the skilled person. A lower hexanal concentration indicates a low degree of oxidation. The preferred hexanal value at packaging is below 12 ppm, even more preferably below 5 ppm. During the storage time, hexanal values for the protein meal or hydrolysate packaged according to the method of the present invention are preferably below 12 ppm, preferably below 5, even more preferably below 4 ppm. The storage time is as previously defined preferably at least 1 month, more preferably at least 2 months, even more preferably at least 3 months, yet more preferably at least 6 months, most preferably at least 12 months.

The hexanal formation during oxidation depends on the fatty acid composition, and its value therefore may vary between different kinds of protein meal or hydrolysates. The hexanal values for protein meal packaged according to the method of the invention are however relatively stable during the storage time. This means that during the storage time, the measured hexanal value for protein meal or hydrolysate in a sealed container never differs by more than 4 ppm, preferably never more than 2 ppm from a value measured at an earlier date for the same container. It is assumed that between measurements, the container is properly sealed and the packing atmosphere does not change significantly.

### Further aspects of the invention

The present invention further provides a container comprising protein meal or hydrolysate with less than 120 ppm of synthetic antioxidants and less than 420 ppm of added natural antioxidants, obtainable by the method according to the invention and/or any one or more of its preferred embodiments.

The present invention also provides the use of a container according to the invention and/or any one or more of its preferred embodiments for storing and/or shipping protein meal or hydrolysate with less than 120 ppm of synthetic antioxidants and less than 420 ppm or natural antioxidants, preferably wherein the protein meal or hydrolysate is stored for at least 1 month, preferably at least 2 months, more preferably at least 3 months, yet more preferably at least 6 months, most preferably at least 12 months.

### Further embodiments

In an embodiment, the invention further relates to a sealed FIBC comprising at least 20 kg, preferably at least 40 kg, more preferably at least 100 kg of fish meal, wherein the fish meal preferably comprises no detectable synthetic antioxidants and preferably no detectable added natural antioxidants, wherein the amount of oxygen is lower than an amount equivalent to the amount of oxygen present at a level of 15% oxygen, preferably 10%, more preferably 6% at atmospheric pressure,
wherein the FIBC preferably comprises an internal plastic liner, which liner preferably comprises at least a layer of EVOH, which liner preferably has an oxygen permeability according to ASTM D3985 of less than 3 cm³ m⁻² day⁻¹, and preferably a water permeability according to ASTM F1249 of less than 1 g m⁻² day⁻¹, wherein the fish meal preferably has a peroxide value below 20 meqO₂/Kg, and preferably a hexanal value below 5 ppm.

In a further embodiment, the invention relates to sealed FIBC comprising at least 20 kg, preferably at least 40 kg, more preferably at least 100 kg of protein meal or hydrolysate, the protein meal being chosen from the group consisting of poultry meal, blood meal, feather meal, and feather hydrolysates, wherein the protein meal or hydrolysate comprises less than 120 ppm of synthetic antioxidants and less than 420 ppm of added natural antioxidants, wherein the amount of oxygen is lower than the amount equivalent to the amount of oxygen present at a level of 6% oxygen at atmospheric pressure,
wherein the FIBC preferably comprises an internal liner, which liner preferably comprises at least a layer of aluminium, which liner preferably has an oxygen permeability according to ASTM D3985 of less than 0.02 cm³ m⁻² day⁻¹, and preferably a water permeability according to ASTM F1249-90 of less than 0.05 g m⁻² day⁻¹, wherein the protein meal or hydrolysate preferably has a peroxide value below 20 meqO₂/Kg, and preferably a hexanal value below 5 ppm.

### Brief description of the figures

Fig. 1 shows of graph of the peroxide value for fish meal experiments
Fig. 2 shows a graph of the hexanal value for fish meal experiments
Fig. 3 shows of graph of the peroxide value after opening for fish meal experiments
Fig. 4 shows a graph of the hexanal value after opening for fish meal experiments
Fig. 5 shows a graph of the peroxide value before and after opening for lab scale fish meal experiments
Fig. 6 shows a graph of the hexanal value before and after opening for lab scale fish meal experiments.

### Experimental

### Materials

FIBC with EVOH liner - Commercially available big bag of 1m x 1m x 1.65 m, approved for food packaging. Equipped with an internal plastic liner glued to the external big bag, which liner has a vacuum valve attached. The internal plastic liner is a 7 layer film of PA(10)/32EVOH(4)/PA(10) with a total thickness of 0.200 mm, oxygen transmission rate according to ASTM D3985 of 2.8 cm³ m⁻² day⁻¹ (23 °C, 75% RH) and water vapour transmission rate according to DIN 53122 of 0.6 g m⁻² day⁻¹ (23 °C, 85% RH).

FIBC with aluminium liner - Commercially available big bag with a height of 200 cm and volume of 1.62 m³, approved for food packaging. Equipped with an internal plastic liner glued to the external big bag, which liner has a vacuum valve attached. The internal plastic liner is a laminated film of PET(12)/adhesive/ALU(9)/adhesive/PE(140) with a total thickness of 0.161 mm, oxygen transmission rate according to ASTM D3985-95 of 0.016 cm³ m⁻² day⁻¹ and moisture permeability according to ASTM F1249-90 of 0.046 g m⁻² day⁻¹.

Fish meal - Standard fish meal free from additives was obtained from Bioceval. The protein level was 62%, with 24% of ash and 9.8% of fat with a moisture content of 3.35 %. The fish meal was used within 7 days from production. Typically, within between 2 - 4 days from production.

Poultry meal - Standard poultry meal was obtained from Avifood. The meal contained 100 ppm of synthetic antioxidant (BHA + BHT + propyl galate) or 100 ppm synthethic + 400 ppm natural antioxidant.

Pork meal - Standard pork meal was obtained from Sarval. The pork meal contained between 53 - 65 % protein, 20 - 34 % ash, about 11 % fat and about 2-3% moisture.

### Filling procedure

Big bags are opened and situated in the mould (housing for stabilization) or in a standard filling unit for FIBCs. During meal loading in the big bags an inert gas may be injected in the open bag. The filling of the big bags takes less than 5 minutes. Once the meal is loaded in the big bag, the plastic liner (optionally comprising an aluminium layer) is tightly closed to allow sucking air from that opening or sealed. The sealing is delicate and should be performed properly to avoid gas leaks and to allow a good and stable vacuum level afterwards. Once the bag is sealed, the vacuum pump is connected to the valve on the liner and a vacuum and/or purging procedure may be carried out.

### Determination of peroxide value

### Step 1: Extraction of fat

The animal fat was extracted out of the meal by a mixture of degassed methanol, chloroform, water and sodium chloride solution. After the sample had settled into a solid and a liquid layer (optionally in the freezer), the chloroform phase was separated and filtered through a paper filter. Subsequently the chloroform was removed by evaporation on a rotary evaporator.

### Step 2: Determination of peroxide value in the extracted fat by iodine titration

The extracted fat from a meal sample was dissolved in a mixture of glacial acetic acid and chloroform. Subsequently potassium iodide and a starch solution were added. The released iodine was titrated with sodium thiosulfate solution until the mixture was completely colourless. The end-point of the titration was determined visually.

### Determination of hexanal value

Hexanal as a volatile compound amongst others was purged with a stream of inert gas out of a sample at a definedtemperature (80°C). The volatile compounds were concentrated in a cold trap which is filled with an adsorbent based on 2,6-diphenyl-p-phenylene oxide (Tenax^{®}). After complete extraction of volatile compounds, the cold trap was heated rapidly and desorption started. By capillary gas chromatography the compounds were separated and they were detected with flame ionization detector (FID) and/or identified by mass spectrometry (MS).

### Fish meal experiments - FIBC with EVOH liner

### Control

An FIBC without internal liner was used for storage of control fish meal. The FIBC was closed to avoid dust in the product, but it was not air sealed. Storage was done in the same warehouse in which the experimental FIBCs were stored.

### Experiment 1 - vacuum

An FIBC with EVOH liner was filled with fish meal according to the filling procedure. Then, a vacuum was applied until the pressure level reached 600 mbar (lowest vacuum level obtainable by the used pump). The duration of the vacuum cycle was 5-7 minutes. The partial O₂ pressure at packing was thus 21% x 600 mbar = 126 mbar. This equals 13% of oxygen at normalized (i.e. atmospheric pressure).

### Experiment 2 - vacuum and nitrogen

An FIBC with EVOH liner was filled with fish meal according to the filling procedure including nitrogen injection. Then, a vacuum was applied until the pressure level reached 600 mbar. Subsequently, nitrogen was injected until a pressure of 1000 mbar. The vacuum and nitrogen injection steps were repeated several times. A total of 4 cycles were performed, ending with vacuum at a reduced pressure of 600 mbar. The amount of oxygen in the bag was lower than an amount of oxygen that would be present in the bag at a level of 1% oxygen at atmospheric pressure. Packaging duration was 30 - 40 min.

### Results

Each bag was opened, and the contents analyzed for their peroxide value and hexanal value. Three different samples were taken at the top, middle and bottom and were pooled together for analyses. Hexanal value, peroxide value, and presence of bacteria at different storage times were analyzed. See table 1.

**Table 1 - Fish meal results**

| | | **Packing day** | **1 month** | **2 m** | **3 m** | **4 m** | **6 m** |
|---|---|---|---|---|---|---|---|
| **PEROXIDE (meqO₂/kg)** | Control | 20.85 | 135.5 | 73.92 | 27.72 | 8.88 | |
| | Vacuum | 20.85 | 16.92 | 5.97 | | | |
| | Vacuum + N₂ | 20.85 | | | 4.66 | | 6.74 |
| **HEXANAL (ppm)** | Control | | 9.3 | 7 | 7.1 | 7.6 | 5.5 |
| | Vacuum | | 1.5 | 1 | | | 2.5 |
| | Vacuum + N₂ | | | | 1.5 | | 1.5 |
| Enteroccocus/ Salmonella | Control | Negative | Negative | Negative | Negative | Negative | Negative |
| | Vacuum | Negative | Negative | Negative | | | Negative |
| | Vacuum + N₂ | Negative | | | Negative | | Negative |

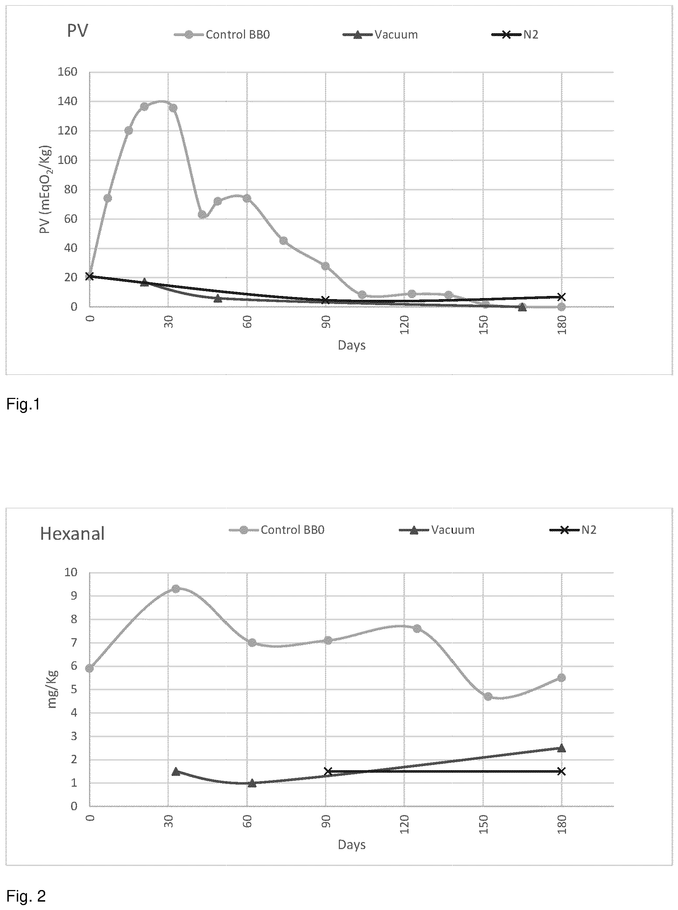

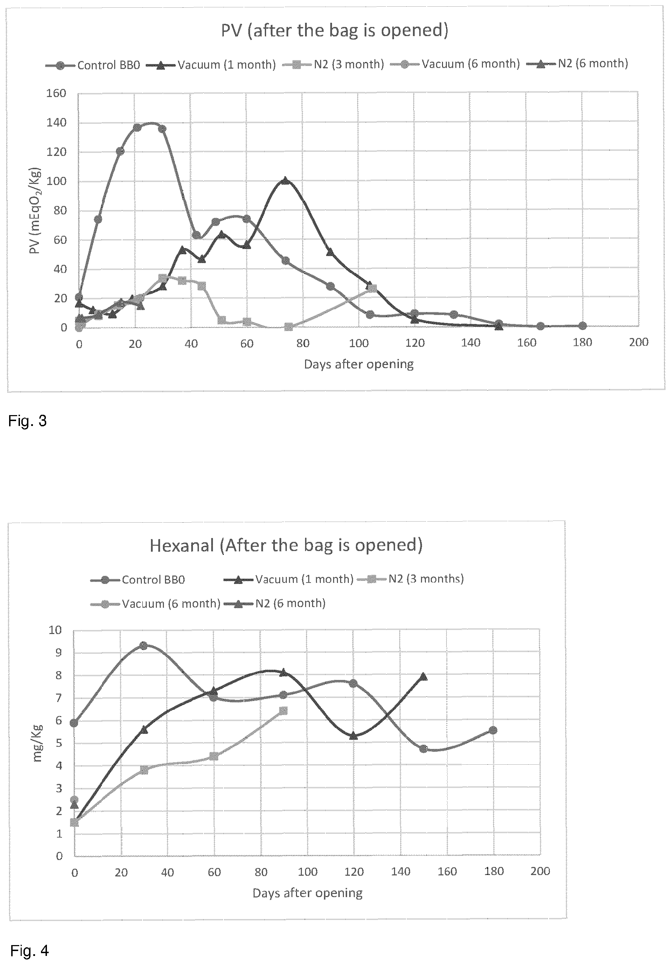

Hexanal and peroxide values at 12 months are comparable to those at 6 months. The results therefore indicate that fish meal without antioxidant is stable with low oxidation up to 12 months of storage under vacuum or vacuum + nitrogen (see table 1, fig. 1 and fig. 2). Once the bags are opened oxidation continues evidencing the good condition of the preserved meal (see table 2, fig. 3 and fig. 4).

**Table 2 - Fish meal results, development after opening**

| | | opening day | 7 days | 15 days | 1m | 1,5m | 2m | 2,5m | 3m | 3,5m | 4m |
|---|---|---|---|---|---|---|---|---|---|---|---|
| **PEROXIDE (meqO₂/kg)** | Control | 20.85 | 74.02 | 120.2 | 135.5 | 62.9 | 73.92 | 45.12 | 27.72 | 8.31 | 8.88 |
| | Vacuum | 16.92 | 12.29 | 9.27 | 28.33 | 46.76 | 56.43 | 100.1 | 52.21 | 28.5 | 5.06 |
| | Vacuum +N₂ | 4.66 | 8.27 | 15.02 | 33.49 | 28.17 | 3.68 | 0 | | 25.95 | |
| **HEXANAL (ppm)** | Control | | 5.9 | | 9.3 | | 7 | | 7.1 | | 7.6 |
| | Vacuum | 1.5 | | | 5.6 | | 7.3 | | 8.1 | | 5.3 |
| | Vacuum +N₂ | 1.5 | | | 3.8 | | 4.4 | | 6.4 | | |

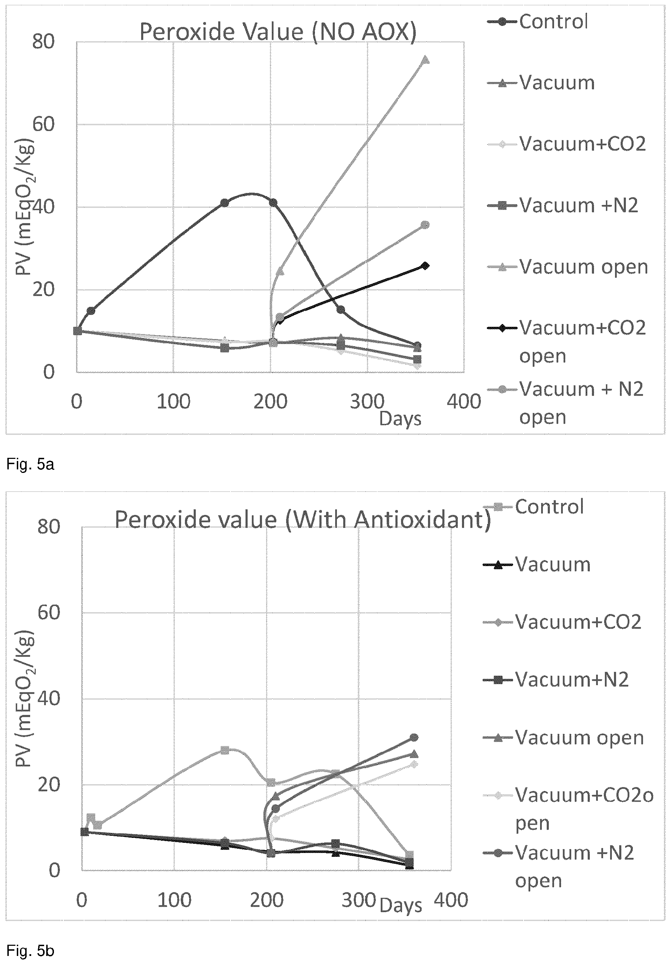

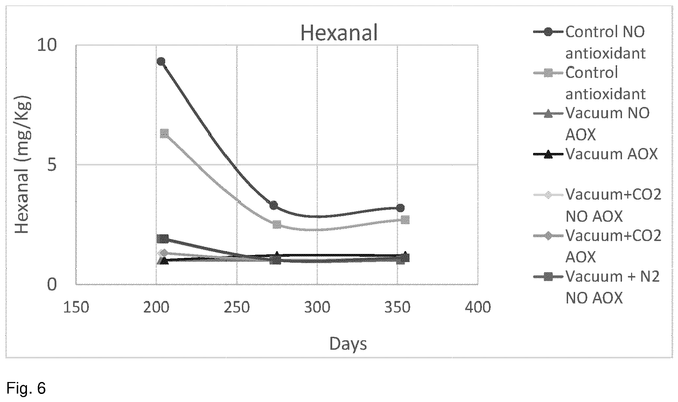

In lab scale experiments performed in a similar fashion, fish meal without any antioxidant was also stable for a year (see results in next paragraph, fig. 5, and fig. 6).

### Fish meal experiments - lab scale bag with EVOH liner

Fish meal produced with 180 ppm synthetic antioxidant (135 mg/kg BHT + 45 mg/kg BHA), and without any antioxidant was packed in 2 kg bags with plastic liners. Six experiments were carried out:
Exp 1: Vacuum - Meal without antioxidant
Exp 2: Vacuum + Nitrogen - Meal without antioxidant
Exp 3: Vacuum + CO₂ - Meal without antioxidant
Exp 4: Vacuum - Meal with Antioxidant
Ext 5: Vacuum + Nitrogen - Meal with Antioxidant
Exp 6: Vacuum + CO₂ - Meal with Antioxidant

The procedures for applying vacuum or vacuum + nitrogen were the same as disclosed for the FIBC fish meal experiments. The procedure for applying vacuum + carbon dioxide was identical to the procedure for applying vacuum + nitrogen, except for injecting carbon dioxide instead of nitrogen.

Oxidation was measured in a control sample (stored in a standard non-hermetic bag) and each bag was opened and analysed at different storage times.

The contents of all bags (vacuum, CO₂, or N₂, with or without antioxidant) were stable for one year compared to the control (not sealed and stored in contact with air), and no increase in oxidation was detected until opening of the bag. Oxidation was measured as peroxide value, and after 200 days, also as hexanal concentration. The meal with antioxidant was slightly less oxidized for the control samples, but the sealed bags did not show difference between the 6 different sealed samples.

As a confirmation of meal stability, the oxidation of the meal after the bag was opened was also measured. In all samples the meal started oxidation after the modified atmosphere was lost.

### Poultry meal experiments - FIBC with aluminium liner

### Control

An FIBC without internal liner was used for storage of the control meal. The FIBC was closed to avoid dust in the product, but it was not air sealed. Storage was done in the same warehouse as wherein the experimental FIBCs were stored.

### Experiment 1 - 100 ppm synthetic antioxidants, vacuum

An FIBC with aluminium liner was filled with poultry meal comprising 100 ppm of synthetic antioxidants (60 ppm from the raw material + additionally 24 ppm BHA, 8 ppm PG, and 8 ppm citric acid added on meal) according to the filling procedure. Then, a vacuum was applied until the pressure level reached 300 mbar.

### Experiment 2 - 100 ppm synthetic antioxidants, vacuum and nitrogen

An FIBC with aluminium liner was filled with poultry meal comprising 100 ppm of synthetic antioxidants (60 ppm from the raw material + additionally 24 ppm BHA, 8 ppm PG, and 8 ppm citric acid added on meal) according to the filling procedure including nitrogen injection. Then, a vacuum was applied until the pressure level reached 300 mbar. Subsequently, nitrogen was injected until a pressure of 1000 mbar. The vacuum and nitrogen injection steps were repeated. A total of 2 cycles was performed, thus ending with a nitrogen atmosphere at 1000 mbar. The final O₂ level was 0.2 %. Due to diffusion of the O₂ in the meal, the O₂ level was 2.7% 20 minutes after sealing.

### Experiment 3 - 100 ppm synthetic + 400 ppm natural antioxidants, vacuum and nitrogen

An FIBC with aluminium liner was filled with poultry meal comprising 100 ppm of synthetic antioxidants (60 ppm from the raw material + additionally 24 ppm BHA, 8 ppm PG, and 8 ppm citric acid added on meal) and 400 ppm natural antioxidants (tocopherol) added on meal according to the filling procedure including nitrogen injection. Then, a vacuum was applied until the pressure level reached 300 mbar. Subsequently, nitrogen was injected until a pressure of 1000 mbar. The vacuum and nitrogen injection steps were repeated. A total of 2 cycles was performed, thus ending with a nitrogen atmosphere at 1000 mbar and an O₂ level lower than an amount equivalent to the amount of oxygen present at a level of 6% oxygen at atmospheric pressure.

Data from the experiments with poultry meal described above, as well as data from pork meal experiments follows a similar trend to data from the experiments with fish meal. The peroxide value of control samples increases significantly after packing, and the hexanal value is consistently high, whereas the peroxide vale of the experiments remains stable and low at a value of below 15 meqO₂/Kg. The hexanal value remains stable and low at a value of about 2 ppm.

## Claims

1. Method for protective atmosphere packaging of protein meal or hydrolysate, the method comprising:
- filling a container with a storage capacity of at least 20 kg, such as an FIBC, with at least 20 kg of protein meal or hydrolysate without significant head space,
wherein the protein meal or hydrolysate comprises less than 120 ppm of synthetic antioxidants and less than 420 ppm of added natural antioxidants,
- depleting the amount of oxygen in the container to a value below an amount which is equivalent to the amount of oxygen present at a level of 15% oxygen at atmospheric pressure,
- sealing the container.

2. Method according to claim 1, wherein the protein meal or hydrolysate comprises less than 100 ppm of synthetic antioxidants, preferably less than 80 ppm, more preferably less than 60 ppm, even more preferably less than 40 ppm, yet more preferably less than 20 ppm, most preferably wherein the protein meal or hydrolysate comprises no detectable synthetic antioxidants.

3. Method according to any one of the preceding claims, wherein the protein meal or hydrolysate comprises less than 400 ppm of natural antioxidants, preferably less than 320 ppm of natural antioxidants, more preferably less than 240 ppm of natural-antioxidants, even more preferably less than 160 ppm of natural antioxidants, yet more preferably less than 80 ppm of natural antioxidants, most preferably wherein the protein meal or hydrolysate comprises no detectable added natural antioxidants.

4. Method according to any one of the preceding claims, wherein if the protein meal or hydrolysate comprises natural antioxidants, these natural antioxidants are chosen from the group consisting of tocopherols and carnosic acid.

5. Method according to any one of the preceding claims, wherein the protein meal or hydrolysate comprises no detectable preservatives, preferably wherein the protein meal or hydrolysate comprises no detectable additives other than antioxidants.

6. Method according to any one of the preceding claims, wherein the protein meal or hydrolysate is based on fish, land animals, avian animals and/or insects, preferably wherein the protein meal or hydrolysate is a fish, land animal and/or avian animal protein meal or hydrolysate.

7. Method according to any one of the preceding claims, wherein the amount of oxygen in the container is depleted to a value below an amount of oxygen which is equivalent to the amount of oxygen present at a level of 10% oxygen, preferably 6%, more preferably 5%, more preferably 4%, more preferably 3%, even more preferably 2%, most preferably 1% oxygen at atmospheric pressure.

8. Method according to any one of the preceding claims, wherein the level of oxygen is depleted by evacuating the bag and/or purging with an inert gas, preferably wherein the level of oxygen in the container is depleted by subsequently evacuating the container to a pressure below 800 mbar and purging with an inert gas to atmospheric pressure at least once, preferably wherein the aforementioned steps are repeated at least twice, more preferably at least 3 times, even more preferably at least 4 times, such as at least 5 times or 10 times.

9. Method according to any one of the preceding claims, wherein the container comprises a film with an oxygen permeability according to ASTM D3985 of less than 5 cm³ m⁻² day⁻¹, preferably less than 3 cm³ m⁻² day⁻¹, more preferably less than 1 cm³ m⁻² day⁻¹, even more preferably less than 0.2 cm³ m⁻² day⁻¹, most preferably less than 0.02 cm³ m⁻² day⁻¹, and/or a water permeability according to ASTM F1249 of less than 1 g m⁻² day⁻¹, preferably less than 0.7 g m⁻² day⁻¹, more preferably less than 0.4 g m⁻² day⁻¹, even more preferably less than 0.1 g m⁻² day⁻¹, most preferably less than 0.05 g m⁻² day⁻¹.

10. Container comprising at least 20 kg of protein meal or hydrolysate with less than 120 ppm of synthetic antioxidants and less than 420 ppm of natural antioxidants, obtainable by the method according to any one of the preceding claims, and suitable for a storage time of at least 1 month, preferably at least 2 months, more preferably at least 3 months, even more preferably at least 6 months, most preferably at least 12 months.

11. Container according to claim 10, comprising an amount of oxygen equivalent to or less than the amount of oxygen present at a level of 15%, preferably a level of 10%, more preferably a level of 6% oxygen at atmospheric pressure.

12. Container according to claim 10 or 11, wherein the protein meal or hydrolysate has a peroxide value below 20 meqO₂/Kg, more preferably below 15 meqO₂/Kg, even more preferably below 10 meqO₂/Kg, most preferably below 8 meq/O₂/Kg.

13. Container according to any one of claims 10 - 12, wherein during the storage time the protein meal or hydrolysate at a measurement date has a peroxide value which is never more than twice as high as a value measured at an earlier measurement date for the same container, preferably never more than 1.5 times as high,
and/or wherein during the storage time the protein meal or hydrolysate has a relative peroxide value PVᵣₑₗ < 6, preferably < 4, more preferably < 2, even more preferably < 1.5, most preferably < 1.

14. Container according to any one of claims 10 - 13, wherein the protein meal or hydrolysate has a hexanal value of below 12 ppm, preferably below 5 ppm, even more preferably below 4 ppm, and/or wherein during the storage time the protein meal or hydrolysate at a measurement date has a hexanal value which never differs by more than 4 ppm, preferably never more than 2 ppm from a value measured at an earlier date for the same container.

15. Use of a container for storing and/or shipping protein meal or hydrolysate with less than 120 ppm of synthetic antioxidants and less than 420 ppm of natural antioxidants, preferably wherein the protein meal or hydrolysate is stored for at least 1 month, preferably at least 2 months, more preferably at least 3 months, even more preferably at least 6 months, most preferably at least 12 months.
